# EUROPÄISCHE PATENTSCHRIFT

(11) **EP 1 731 453 B1**
(45) Veröffentlichungstag und Bekanntmachung des Hinweises auf die Patenterteilung: **13.08.2008**
(21) Anmeldenummer: 06011864.3
(22) Anmeldetag: 08.06.2006
(51) Int. Cl.: B65G 57/16

(54) **Verfahren und Vorrichtung zum Stapeln von tiefgezogenen Artikeln**
Method and device for stacking deep drawn articles
Procédé et dispositif pour empiler des articles obtenus par emboutissage profond

(30) Priorität: 09.06.2005 DE 102005026687
(43) Veröffentlichungstag der Anmeldung: 13.12.2006
(73) Patentinhaber: KIEFEL AG, 83395 Freilassing (DE)
(72) Erfinder: Huber, Anton, 5301 Eugendorf (AT); Crepaz, Johannes, 5071 Wals-Siezenheim (AT); Julinek, Stefan, 83253 Rimsting (DE); Scheutz, Franz, 83395 Freilassing (DE)
(74) Vertreter: Castell, Klaus

(56) Entgegenhaltungen:
- EP-A- 1 201 574
- EP-A- 1 232 970
- DE-U1- 29 608 477

## Beschreibung

Die Erfindung bezieht sich auf ein Verfahren zum Stapeln von tiefgezogenen oder im Spritzgussverfahren hergestellten Artikeln, die in einem Mehrfach-Form- und Stanzwerkzeug aus einer thermoplastischen Kunststofffolie geformt, ausgestanzt und mittels einer Übergabeeinrichtung zu einer Stapelstation und von dort zu einer Ausschiebereinheit und einer Transporteinrichtung geführt werden.

Die Erfindung bezieht sich auch auf eine Vorrichtung zum Stapeln von Artikeln entsprechend dem Oberbegriff des Anspruchs 5.

Aus der EP 1 075 924 B1 ist ein Verfahren und eine Vorrichtung zum Stapeln von Behältern bekannt. Dort werden die aus dem Formwerkzeug ausgestoßenen Behälter mittels zweier Halteplatten abwechselnd zu zwei Stapelstationen überführt, wobei die Stapelstationen jeweils zwei an Führungen waagrecht und senkrecht mit besonderen Antrieben verfahrbare Stapelkörbe umfassen. Die beiden Halteplatten sind notwendig, um innerhalb eines Maschinentaktes der Formmaschine die Artikel aufnehmen und weiterleiten zu können. Dies erfordert einen erheblichen Aufwand, da zwei Halteplatten und zwei Stapelstationen mit jeweils zwei Stapelkörben sowie entsprechend aufwendige Führungen und Antriebe für die Stapelkörbe erforderlich sind.

Die EP 1 232 970 A1 offenbart eine Anlage zum Entladen von Produktstapeln aus einer Thermoformanlage. Die Thermoformanlage erzeugt Stapel der Produkte in einem Käfig. Der Käfig wird von einer Unterstützungsplatte über einen bestimmten, voreingestellten Winkel um eine horizontale Achse geschwenkt, sodass die Produktstapel von einer aufgerichteten Stellung in eine geneigte Stellung gebracht werden. In dieser geneigten Stellung werden die Produktstapel mit einem Ausschiebestempel aus dem Käfig hinaus auf ein Förderband geschoben. Dort werden sie für die weitere Bearbeitung oder Verpackung abtransportiert.

Die EP 1201 574 A1 zeigt eine Anlage, bei welcher das Stapeln von Teilen aus thermoplastischen Kunststoffen in einen Pufferkäfig und die Weiterführung der Stapel zu Nachfolgeeinrichtungen behandelt wird. Die Übergabe der Stapel auf ein Querförderband oder direkt zu einer Nachbearbeitungseinrichtung wird durch einen schwenkbaren Stapelkäfig wahlweise stehend oder liegend vorgenommen und ist deshalb sowohl für flache wie für hohe Teile einsetzbar. Das Verfahren kann bei hohen Taktzahlen Anwendung finden und erlaubt auch den Einbau von Einrichtungen, die das Auseinanderdriften der Teile im Pufferkäfig sicher verhindern, wie es insbesondere bei flachen Teilen von Vorteil ist.

Die DE 296 08 477 U1 zeigt eine Vorrichtung zum Überführen von mehrreihig zugeführten Behältern in einen einzigen Behälterstapel mit einem Stapelkäfig, wobei der Stapelkäfig höhenverschiebbar und schwenkbar ausgebildet ist.

Aufgabe der Erfindung ist es, das Handling beim Stapeln von tiefgezogenen oder im Spritzgussverfahren hergestellten Artikeln zu verbessern, wobei eine hierzu vorgesehene Anlage viele Freiheitsgrade haben soll, um auch auf kompakten Raum zahlreiche Bewegungsmöglichkeiten ausführen zu können.

Nach einem ersten Aspekt der Erfindung löst diese Aufgabe ein Verfahren mit den Merkmalen des Anspruchs 1.

Bei der vorliegenden Erfindung wird also die Übergabeeinrichtung mit einer solch großen Geschwindigkeit bewegt, dass sie im Rahmen eines Maschinentaktes des Mehrfachformwerkzeuges in der Lage ist, die aus dem Mehrfachformwerkzeug ausgestoßenen Artikel einem von zwei Stapelkörben einer Stapelstation zuzuführen. Damit wird der bei der bekannten Ausgestaltung notwendige Verfahrensaufwand der Verschiebung von zwei Halteplatten und jeweils zwei Stapelkörben in zwei Stapelstationen auf die Hälfte reduziert. Da die Stapelkörbe um z.B. 180° geschwenkt und der Stapelkorb, der sich in der Ausschiebeposition befindet nochmals geschwenkt und verschoben wird, um das Ausschieben zu ermöglichen, ist der Aufwand entsprechend der bekannten Vorrichtung für das waagrechte und vertikale Verfahren der verschiedenen Stapelkörbe vermindert. Ein besonders wertvoller Vorteil des erfindungsgemäßen Verfahrens besteht darin, dass die Ausschiebereinheit bei H- und W-Versatz der Artikelreihen quer zur Verschieberichtung des Stapelkorbes verschoben werden kann, was den Einsatz von Stapelkörben mit dem erwähnten Versatz ermöglicht.

Eine vorteilhafte Ausgestaltung der Erfindung besteht darin, dass die Übergabeeinrichtung die Artikel an eine Zwischenstation übergibt und dass dann die Artikel zur zusätzlichen Bearbeitung an eine Bearbeitungsstation übergeben werden. Eine zusätzliche Bearbeitung kann in Form einer Lochstanzung im Boden der Artikel, des Aufbringens von Etiketten, des Bedrückens der Artikel usw. erfolgen.

Die bearbeiteten Artikel werden nach der Bearbeitung einem der beiden Stapelkörbe, der sich in der Übergabeposition der Stapelstation befindet, zugeführt.

Nach einem zweiten Aspekt der Erfindung löst die gestellte Aufgabe eine Vorrichtung mit den Merkmalen des Anspruch 5.

Damit die Greiferplatte mit der erforderlichen Geschwindigkeit zwischen dem Mehrfachformwerkzeug und der Stapelstation oder einer sonstigen Zwischenstation hin und her bewegbar ist, besteht die Greiferplatte aus karbonfaserverstärktem Kunststoff und ist an einem Haltearm befestigt, der die Greiferplatte durch zumindest einen Antrieb von dem Mehrfachwerkzeug zu einer Stapelstation oder einer anderen Zwischenstation befördert. Eine besonders einfache Ausgestaltung ergibt sich, wenn die erste Schwenkachse der Stapelstation vertikal ausgerichtet ist. Hieraus ergibt sich zwangsläufig, dass die zweite Schwenkachse horizontal verläuft und die Verschieberichtung des Stapelkorbes in der Ausschiebeposition in vertikaler Richtung verläuft.

Sofern eine Zwischenstation vorgesehen ist, ist die Ausgestaltung so getroffen, dass diese einen Drehtisch oder ein Drehkreuz mit mindestens zwei Körben zur Aufnahme der von der Greiferplatte bereitgestellten einlagigen Artikel aufweist, dass der Drehtisch im Arbeitstakt des Mehrfachformwerkzeuges weiterschaltbar ist, wobei die erste Schaltstation bezogen auf einen Korb die Übernahmestation für die Artikel, die zweite Schaltstation eine Bearbeitungsstation für die Artikel, die dritte Schaltstation eine Übergabestation an einen der beiden Stapelkörbe der Stapelstation und die vierte Station eine Leerstation darstellt und dass in der Übergabestation eine Überschiebereinheit zum Überführen der Artikel von dem Drehkreuzkorb in einen Stapelkorb der Stapelstation vorgesehen ist.

Weiterhin ist erfindungsgemäß vorgesehen, dass in der dritten Schaltstation eine Überschiebeeinrichtung für die Übergabe der Artikel aus dem Drehkreuzkorb in den Stapelkorb vorgesehen ist.

Es kann für manche Bearbeitungsfälle zweckmäßig sein, wenn die Stapelkörbe lösbar an den Armen der Stapelstation angeordnet sind, weil hierdurch die manuelle Entnahme eines Stapelkorbes möglich ist.

Zur Erhöhung der Sicherheit kann vor der Übernahmestation eine Kontrolleinrichtung für die Entleerung des Drehkreuzkorbes angeordnet sein.

Die Erfindung wird nachfolgend anhand zweier in der Zeichnung dargestellter Ausführungsbeispiele näher erläutert. Es zeigen:
- **Figur 1:**: eine Ansicht eines ersten Ausführungsbeispieles einer Vorrichtung zum Stapeln von Behältern;
- **Figur 2:**: eine weitere Ausgestaltung einer Vorrichtung zum Stapeln von Behältern;
- **Figur 3:**: eine Ansicht von oben auf die Vorrichtung gemäß Figur 2;
- **Figur 4:**: eine Ansicht in Richtung des Pfeiles IV in Figur 3 mit einer ersten Position eines Stapelkorbes;
- **Figur 5:**: eine der Figur 4 entsprechenden Ansicht mit einer weiteren Position eines Stapelkorbes;
- **Figur 6:**: eine der Figur 5 entsprechende Ansicht mit einer ersten ausgeschobenen Stapelreihe der Artikel; und
- **Figur 7:**: eine der Figur 6 entsprechende Darstellung mit einer weiteren Position des Stapelkorbes.

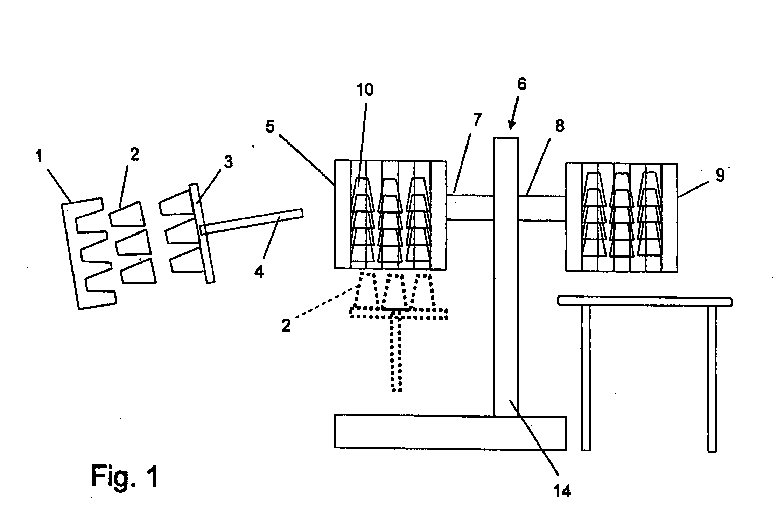

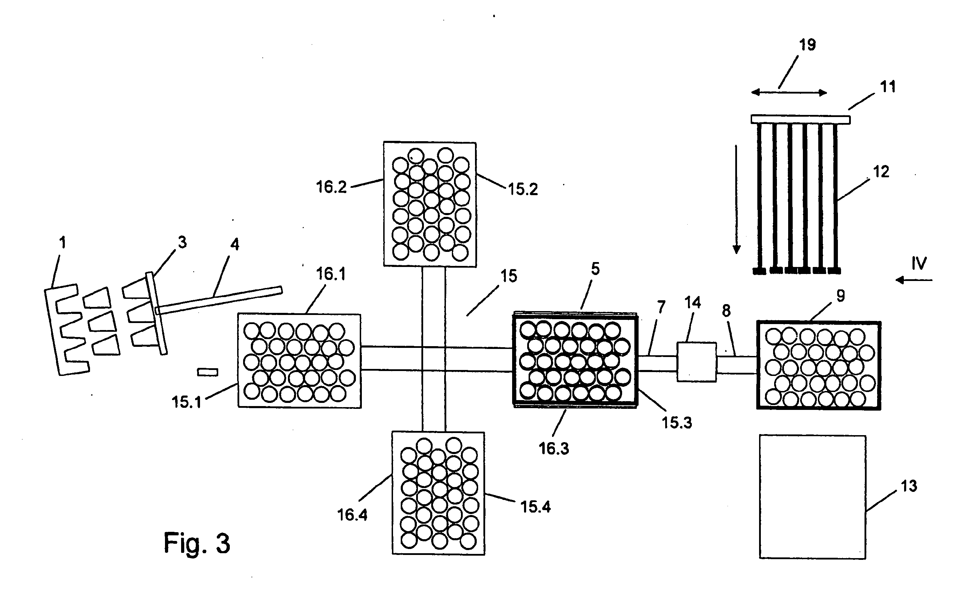

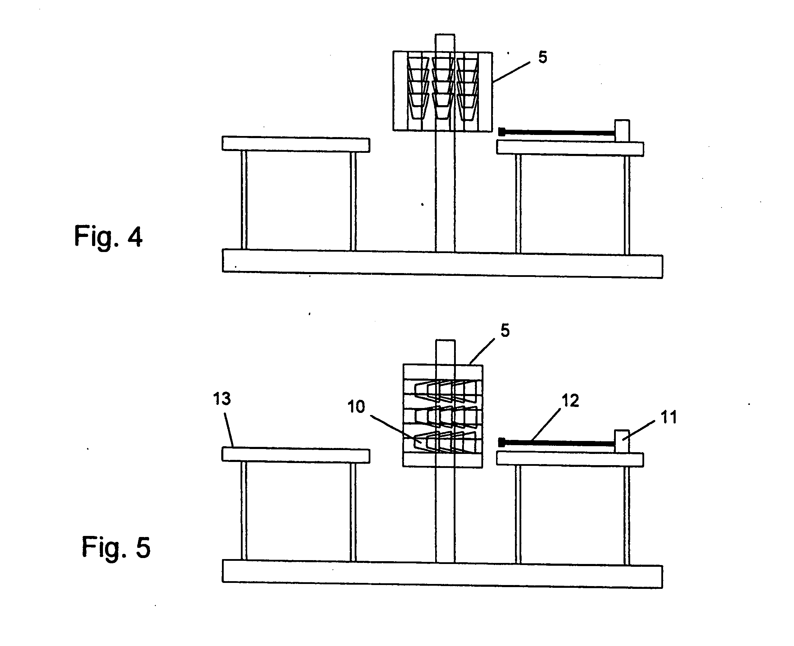

Bei der Ausgestaltung nach Fig. 1 werden die fertigen Artikel, die mit 2 bezeichnet sind, mittels einer Greiferplatte 3 einem Unterteil 1 einer Thermoformmaschine entnommen. Diese in Leichtbauweise gefertigte Greiferplatte 3 ist an einem Arm 4 befestigt, mittels dessen die aufgenommenen Artikel 2 von unten her einem Stapelkorb von zwei Stapelkörben 5 und 9 zugeführt werden können. Diese Stapelkörbe gehören zu einer mit 6 bezeichneten Stapelstation, die eine Säule 14 umfasst und zwei Tragarme 7 und 8 aufweist, an denen die Stapelkörbe 5 und 9 befestigt sind. Der Stapelkorb 5 befindet sich in der Aufnahmeposition in der die becherartigen Artikel 2 von unten in den Stapelkorb eingeschoben werden. Nach Erreichen einer vorbestimmten Anzahl von Artikeln je Artikelstange 10 werden die Stapelkörbe 5 und 9 um z.B. 180° verschwenkt, so dass der Stapelkorb 5 die Position einnimmt, die in der dargestellten Lage nach Figur 1 der Stapelkorb 9 eingenommen hatte. Wenn der Stapelkorb 5 in die neue Position geschwenkt ist, wird er um eine weitere Achse, die sich in Längsrichtung des Armes 7 erstreckt geschwenkt, wie dies aus der Darstellung nach Figur 5 hervorgeht. In den Figuren 3 bis 7 ist eine Ausschiebereinheit 11 dargestellt, die den Speicherplätzen im Stapelkorb 5 entsprechende Ausschieberstangen 12 aufweisen, mit denen die einzelnen Artikelstangen 10 ausgeschoben werden können.

Der Stapelkorb 5 ist in Vertikalrichtung der die Arme 7 und 8 mit den Stapelkörben 5 und 9 tragenden Säule 14 verschiebbar, damit die jeweils nächsthöhere Reihe an Artikelstangen 10 durch die Ausschieberstangen 12 ausgeschoben werden können. Diese Verschiebbarkeit ist in den Figuren 5 bis 7 veranschaulicht.

Die Figur 4 zeigt den Stapelkorb 5 nach der Verschwenkung um 180° ausgehend von der Position nach Figur 1. Figur 5 zeigt die Stellung des Stapelkorbes 5 in einer geschwenkten Stellung und zwar um eine Achse, die in Längsrichtung des Haltearmes 7 verläuft. In der in Figur 5 dargestellten Lage kann eine Ausschiebereinheit 11 mit Ausschieberstangen 12 die unterste Reihe der Artikelstangen 10 auf ein dahinter angeordnetes Förderband 13 hinausschieben.

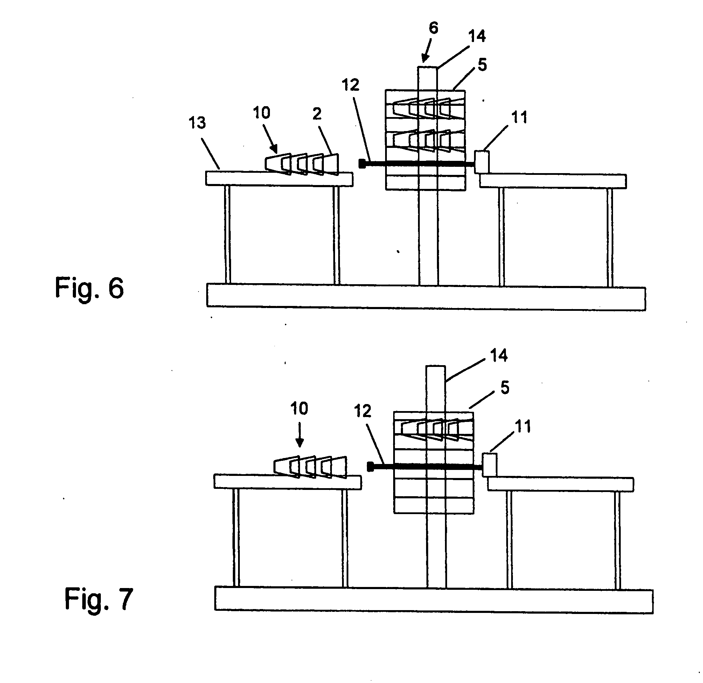

Bei der Darstellung nach Figur 6 ist gerade die unterste Artikelstangenreihe mit der Ausschieberstange 12 ausgeschoben. Die ausgeschobenen Artikelstangen gelangen auf ein Förderband 13.

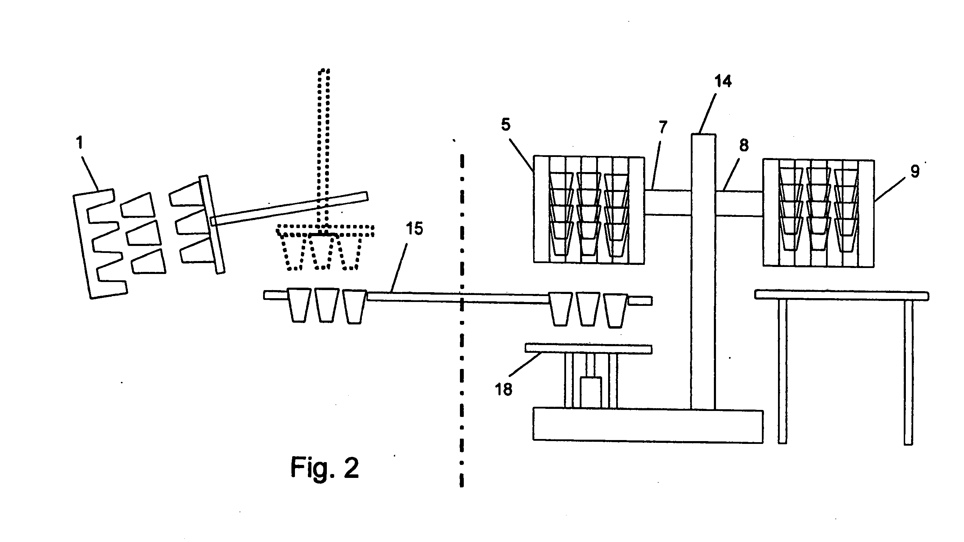

Figur 2 zeigt eine erweiterte Ausgestaltung der Gesamtvorrichtung. Hier ist gegenüber Figur 1 eine Zwischenstation gezeigt, die einen Drehtisch 15 umfasst, der, wie aus Figur 3 ersichtlich, vier mindestens aber zwei Arbeitsplätze bzw. Schaltstationen 16.1 bis 16.4 aufweist. Die Schaltstation 16.1 dient zur Übernahme einer aus der Mehrfachformmaschine kommenden Lage von Artikeln 2, wie dies aus Figur 2 ersichtlich ist. Das insgesamt mit 15 bezeichnete Drehkreuz weist Drehkreuzkörbe 15.1 bis 15.4 auf, die der Reihe nach im Arbeitstakt der Mehrfachformmaschine von einer Schaltstation zur nächsten weitergedreht werden. Nachdem ein Drehkreuzkorb 15.1 in der Schaltstation 16.1 eine Lage von Artikeln 2 aufgenommen hat, wird er in die Schaltstation 16.2 verbracht, wo eine Bearbeitung der Artikel, beispielsweise eine Lochstanzung der Böden vorgenommen werden kann. Bei der nächsten Schaltfolge in die Schaltstation 16.3 erfolgt, wie dies aus Figur 2 zu entnehmen ist eine Übergabe der Artikel in einen der beiden Stapelkörbe 5 bzw. 9. Danach wird der leere Drehkreuzkorb aus der Position 16.3 in die leere Schaltstation 16.4 verbracht und kann dann in der weitergeschalteten Position in der Schaltstellung 16.1 wieder neue Artikel aufnehmen.

Wenn sich ein Drehkreuzkorb in der Schaltposition 16.3 befindet, so werden die einzelnen Artikellagen mittels einer Überschiebeeinrichtung 18 in den Stapelkorb 5 nach oben geschoben. Sobald eine bestimmte Anzahl von Lagen in dem Stapelkorb 5 aufgenommen sind, erfolgt die Verschwenkung der Körbe um die senkrechte Achse der Säule 14, wodurch der Stapelkorb 5 in die Position über der Ausschiebeeinheit gelangt, wie dies weiter oben schon erläutert wurde. Die Ausschiebereinheit 11 kann entsprechend dem in Figur 3 eingezeichneten Doppelpfeil 19 in horizontaler Richtung verschoben werden, um bei einem H- oder W-Versatz der Artikelreihen ein Ausschieben derselben zu ermöglichen.

## Patentansprüche

1. Verfahren zum Stapeln von tiefgezogenen, in einem Mehrfach-Form- und Stanzwerkzeug aus einer thermoplastischen Kunststofffolie geformten und ausgestanzten, oder im Spritzgussverfahren hergestellten Artikeln (2), die mittels einer Übergabeeinrichtung(3, 4) zu einer Stapelstation (6) und von dort zu einer Ausschiebereinheit (11) und einer Transporteinrichtung, beispielsweise einem Förderband (13), geführt werden, wobei die Übergabeeinrichtung (3, 4) die Artikel (2) im Takt des Formens, und gegebenenfalls des Ausstanzens, an eine Stapelvorrichtung zum Bilden von Artikelstangen (10) übergibt, welche sich in einer Übernahmeposition der Stapelstation (6) befindet, wobei nach Erreichen einer vorgewählten Stückzahl die Artikelstangen (10) um eine erste Achse geschwenkt werden, insbesondere um eine Säule (14), woraufhin die Artikelstangen (10) in einer Ausschiebeposition schrittweise gegenüber der Ausschiebereinheit (11) verschoben werden, wobei bei jedem Schritt eine Reihe von Artikelstangen (10) auf die Transporteinrichtung überführt wird, ***dadurch gekennzeichnet, dass*** die Artikel (2) an einen (5) von mindestens zwei Stapelkörben (5, 9) übergeben werden, dass das Schwenken und Verschieben der Artikelstangen (10) in einem befüllten Stapelkorb (5, 9) erfolgt, dass der befüllte Stapelkorb (5, 9) in der Ausschiebeposition um eine zweite Achse geschwenkt wird und dass die Aussschiebereinheit (11) bei H-und W-Versatz der Artikelreihen quer zu einer Verschieberichtung des Stapelkorbs (5, 9) verschoben wird.

2. Verfahren nach Anspruch 1, ***dadurch gekennzeichnet, dass*** die Übergabeeinrichtung (3, 4) die Artikel (2) an eine Zwischenstation übergibt und dass dann die Artikel (2) zur zusätzlichen Bearbeitung an eine Bearbeitungsstation übergeben werden.

3. Verfahren nach Anspruch 2, ***dadurch gekennzeichnet,* *dass*** eine zusätzliche Bearbeitung in Form einer Lochstanzung im Boden der Artikel (2), des Aufbringens von Etiketten, des Bedruckens der Artikel usw. erfolgt.

4. Verfahren nach Anspruch 2 oder 3, **dadurch *gekennzeichnet, dass*** die bearbeiteten Artikel (2) dem einen (5) der beiden Stapelkörbe(5, 9), der sich in der Übernahmeposition der Stapelstation befindet, zugeführt wird.

5. Vorrichtung zum Stapeln von Artikel (2), die in einem Mehrfach-Form- und Stanzwerkzeug (1) aus einer thermoplastischen Kunststofffolie geformt und ausgestanzt werden, mit einer Übergabeeinrichtung (3), die die aus dem Mehrfachformwerkzeug (1) ausgestoßenen Artikel (2) erfasst und sie an eine Stapelstation (14) zur Bildung von mehrreihigen Artikelstangen (10) übergibt und mit einer Ausschiebereinheit (11), die die gebildeten Artikelstangen (10) auf ein Förderband (13) ausschiebt, wobei die Übergabeein richtung eine einzige Greiferplatte (3) mit dem Mehrfachformwerkzeug (1) entsprechenden Artikelplätzen aufweist, wobei die Stapelstation (6) mindestens zwei um eine erste Schwenkachse an Armen (7, 8) schwenkbar gehaltene Stapelkörbe (5, 9) umfasst, von denen der eine Stapelkorb (5) sich in einer Übernahmeposition und der andere Stapelkorb (9) sich in einer Ausschiebeposition befindet, in der er gegenüber einer Ausschiebereinheit (11) schrittweise entsprechend dem Abstand der Artikelstangenreihen verschiebbar gehalten ist , ***dadurch gekennzeichnet, dass*** die Ausschiebereinheit (11) quer zur Verschieberichtung des Stapelkorbes (9) verschiebbar geführt ist, dass die Greiferplatte der Übergabeeinrichtung in Leichtbauweise ausgeführt ist und dass der gefüllte Stapelkorb (5, 9) in der Ausschiebeposition um eine zweite, rechtwinklig zur ersten Schwenkachse stehenden Schwenkachse schwenkbar gehalten ist.

6. Vorrichtung nach Anspruch 5, ***dadurch gekennzeichnet, dass*** die Greiferplatte (3) aus karbonfaserverstärktem Kunststoff besteht und an einem Haltearm (4) befestigt ist, der die Greiferplatte (3) durch zumindest einen Antrieb von dem Mehrfachwerkzeug (1) zu einer Stapelstation (6) oder einer Zwischenstation (15) befördert.

7. Verfahren nach Anspruch 5 oder 6, ***dadurch gekennzeichnet,* dass** die erste Schwenkachse der Stapelstation (14) vertikal ausgerichtet ist.

8. Vorrichtung nach einem der Ansprüche 6 oder 7, ***da durch gekennzeichnet,* dass** die Zwischenstation (15) einen Drehtisch oder ein Drehkreuz mit mindestens zwei Körben (15.1 bis 15.4) zur Aufnahme der von der Greiferplatte (3) be reitgestellten einlagigen Artikel aufweist, dass der Drehtisch (15) im Arbeitstakt des Mehrfachformwerkzeuges (1) weiterschaltbar ist, wobei die erste Schaltstation (16.1) bezogen auf einen Drehtischkorb die Übernahmestation für die Artikel (2), die zweite Schaltstation (16.2) eine Bearbeitungsstation für die Artikel (2), die dritte Schaltstation (16.3) eine Übergabestation an einen der beiden Stapelkörbe (5, 9) der Stapelstation und die vierte Station (16.4) eine Leerstation darstellt und dass in der Übergabestation eine Überschiebeeinheit (18) zum Über führen der Artikel von dem Drehkreuzkorb (15.3) in einen Sta pelkorb (5, 9) der Stapelstation (6) vorgesehen ist.

9. Vorrichtung nach Anspruch 8, ***dadurch gekennzeichnet, dass*** in der dritten Schaltstation (16.3) eine Überschiebeeinrichtung (18) für die Übergabe der Artikel (2) aus dem Drehkreuzkorb (15) in den Stapelkorb (5, 9) vorgesehen ist.

10. Vorrichtung nach einem der Ansprüche 5 bis 9, ***dadurch gekennzeichnet, dass*** die Stapelkörbe (5, 9) lösbar an den Armen (7, 8) der Stapelstation (6) angeordnet sind.

11. Vorrichtung nach einem der Ansprüche 5 bis 10, ***dadurch gekennzeichnet, dass*** vor der Übernahmestation (16.1) eine Kontrolleinrichtung für die Entleerung des Drehkreuzkor bes angeordnet ist.

## Claims

1. A method of stacking deep drawn articles (2) formed and cut from a thermoplastic foil in a multiple form and punching tool or made by injection moulding, said articles being conveyed, by means of a transfer device (3, 4), to a stacking station (6) and from there to an evacuation unit (11) and by means of a conveying device such as a conveyor belt (13), said transfer device (3, 4) transferring the articles (2) in synchronism with forming and, if applicable with punching, to a stacking device for forming bars (10) of articles that is located in a receiving position of the stacking station (6), said bars (10) of articles being pivoted about a first axis, more specifically about a column (14), once a pre-selected number of pieces has been achieved, said bars (10) of articles, which are in an evacuation position, being displaced step by step with respect to said evacuation unit (11), one row of bars (10) of articles being transferred to the conveying device at each step, ***characterized in that*** the articles (2) are transferred to one (5) of at least two stacking baskets (5, 9), that the bars (10) of articles are pivoted and displaced in a filled stacking basket (5, 9), that the filled stacking basket (5, 9) is pivoted about a second axis in the evacuation position and that the evacuation unit (11) is displaced transverse to a direction of displacement of the stacking basket (5, 9) when the rows of articles are staggered in a H and a W shape.

2. The method as set forth in claim 1, ***characterized in that*** the transfer device (3, 4) transfers the articles (2) to an intermediate station and that the articles (2) are then transferred to a machining station for additional machining.

3. The method as set forth in claim 2, ***characterized in that*** additional machining occurs in the form of holes being punched in the bottom of the articles (2), of labels being applied, of the articles being printing, and so on.

4. The method as set forth in claim 2 or 3, ***characterized in that*** the machined articles (2) are supplied to the one (5) of the two stacking baskets (5, 9) which is located in the receiving position of the stacking station.

5. An apparatus for stacking articles (2) formed and cut from a thermoplastic foil in a multiple form and punching tool (1), with a transfer device (3) for collecting the articles (2) ejected from the multiple form tool (1) and for transferring them to a stacking station (14) for forming several rows of bars (10) of articles and with an evacuation unit (11) for evacuating the bars (10) of articles formed onto a conveyor belt (13), said transfer device comprising one single gripper plate (3) with places for the articles corresponding to the multiple form tool (1), said stacking station (6) including at least two stacking baskets (5, 9) retained on arms (7, 8) for pivotal movement about a first axis of pivotal movement, the one stacking basket (5) being in a receiving position and the other stacking basket (9) in an evacuation position in which it is retained for step by step displacement with respect to an evacuation unit (11) according to the spacing between the rows of bars of articles, ***characterized in that*** the evacuation unit (11) is guided for displacement transverse to the direction of displacement of the stacking basket (9), that said gripper plate of the transfer device is of a lightweight construction and that the filled stacking basket (5, 9) is retained in the evacuation position for pivotal movement about a second axis of pivotal movement, at right angles to the first axis of pivotal movement.

6. The apparatus as set forth in claim 5, ***characterized in that*** the gripper plate (3) is made from carbon fiber reinforced plastic and is fastened to a holding arm (4) that transports the gripper plate (3) through at least one drive from the multiple tool (1) to a stacking station (6) or to an intermediate station (15).

7. The apparatus as set forth in claim 5 or 6, ***characterized in that*** the first axis of pivotal movement of the stacking station (14) is oriented vertically.

8. The apparatus as set forth in any one of the claims 6 or 7, ***characterized in that*** the intermediate station (15) comprises a rotary table or a turret with at least two baskets (15.1 through 15.4) for receiving the one-layer articles provided by the gripper plate (3), that the rotary table (15) may be rotated in synchronism with the working cycle of the multiple form tool (1), the first rotary station (16.1) related to a rotary table basket constituting the receiving station for receiving the articles (2), the second rotary station (16.2), a machining station for machining the articles (2), the third rotary station (16.3), a transfer station for transfer to one of the two stacking baskets (5, 9) of the stacking station and the fourth station (16.4), an empty station and that, in the transfer station, there is provided a shifting device (18) for transferring the articles from the turret basket (15.3) to a stacking basket (5, 9) of the stacking station (6).

9. The apparatus as set forth in claim 8, ***characterized in that,*** in the third rotary station (16.3), there is provided a shifting device (18) for transferring the articles (2) from the turret basket (15) to the stacking basket (5, 9).

10. The apparatus as set forth in any one of the claims 5 through 9, ***characterized in that*** the stacking baskets (5, 9) are removably disposed on the arms (7, 8) of the stacking station (6).

11. The apparatus as set forth in any one of the claims 5 through 10, ***characterized in that*** a control device for emptying the turret basket is disposed upstream of the receiving station (16.1).

## Revendications

1. Procédé pour empiler des articles (2) obtenus par emboutissage, formés et découpés dans une feuille thermoplastique dans un outil de mise en forme multiple et de découpe ou réalisés par moulage par injection, ces articles étant acheminés au moyen d'un système de transfert (3, 4) vers une station d'empilage (6) et de là à une unité d'évacuation (11) et d'un système de transport, par exemple d'un convoyeur à bande (13), le système de transfert (3, 4) transférant les articles (2) à la cadence de la mise en forme, et le cas échéant de la découpe, à un dispositif d'empilage destiné à former des barres (10) d'articles et qui se trouve dans une position de réception de la station d'empilage (6), ces barres (10) d'articles étant pivotées autour d'un premier axe, notamment autour d'une colonne (14), une fois qu'un nombre de pièces choisi au préalable est atteint, les barres (10) d'articles, qui se trouvent en position d'évacuation, étant alors déplacées pas à pas par rapport à l'unité d'évacuation (11), une rangée de barres (10) d'articles étant transférée sur le système de transport à chaque pas, ***caractérisé en ce que*** les articles (2) sont placés dans un (5) d'au moins deux paniers d'empilage (5, 9), que les barres (10) d'articles sont pivotées et déplacées dans un panier d'empilage (5, 9) rempli, qu'en position d'évacuation le panier d'empilage (5, 9) rempli est pivoté autour d'un deuxième axe et que l'unité d'évacuation (11) est déplacée transversalement par rapport à un sens de déplacement du panier d'empilage (5, 9) lorsque les rangées d'articles sont décalées en H et en W.

2. Procédé selon la revendication 1, ***caractérisé en ce que*** le système de transfert (3, 4) transfère les articles (2) à une station intermédiaire et que les articles (2) sont ensuite transférés à une station d'usinage pour un usinage supplémentaire.

3. Procédé selon la revendication 2, ***caractérisé en ce qu'***un usinage supplémentaire est réalisé sous forme de perforations dans le fond des articles (2), d'application d'étiquettes, d'impression des articles, etc.

4. Procédé selon la revendication 2 ou 3, ***caractérisé en ce que*** les articles (2) usinés sont acheminés vers l'un (5) des deux paniers d'empilage (5, 9) situés dans la position de réception de la station d'empilage.

5. Dispositif pour empiler des articles (2) mis en forme et découpés dans une feuille thermoplastique dans un outil de mise en forme multiple et de découpe (1), avec un système de transfert (3) qui saisit les articles (2) éjectés de l'outil de mise en forme multiple (1) et les transfère à une station d'empilage (14) destinée à former des barres (10) d'articles en plusieurs rangées, et avec une unité d'évacuation (11) qui évacue les barres (10) d'articles formées sur un convoyeur à bande (13), le système de transfert ne comportant qu'une seule et unique plaque de préhension (3) avec des endroits pour les articles correspondant à l'outil de mise en forme multiple (1), la station d'empilage (6) comprenant au moins deux paniers d'empilage (5, 9) retenus, mobiles en pivotement autour d'un premier axe de pivotement, sur des bras (7, 8), l'un des paniers d'empilage (5) se trouvant en position de réception et l'autre panier d'empilage (9) dans une position d'évacuation dans laquelle il est retenu, mobile en translation par rapport à une unité d'évacuation (11), pas à pas suivant l'écart entre les rangées de barres d'articles, ***caractérisé en ce que*** l'unité d'évacuation (11) est guidée mobile en translation en travers du sens de déplacement du panier d'empilage (9), que la plaque de préhension du système de transfert est de construction légère et qu'en position d'évacuation le panier d'empilage (5, 9) rempli est retenu mobile en pivotement autour d'un deuxième axe de pivotement perpendiculaire au premier axe de pivotement.

6. Dispositif selon la revendication 5, ***caractérisé en ce que*** la plaque de préhension (3) est réalisée en matière plastique renforcée par des fibres de carbone et qu'elle est fixée à un bras de retenue (4) qui transporte la plaque de préhension (3) par au moins un entraînement depuis l'outil multiple (1) jusqu'à une station d'empilage (6) ou à une station intermédiaire (15).

7. Dispositif selon la revendication 5 ou 6, ***caractérisé en ce que*** le premier axe de pivotement de la station d'empilage (14) est orienté verticalement.

8. Dispositif selon l'une quelconque des revendications 6 ou 7, ***caractérisé en ce que*** la station intermédiaire (15) comporte une table tournante ou un tourniquet avec au moins deux paniers (15.1 à 15.4) destinés à recevoir les articles monocouches fournis par la plaque de préhension (3), que la table tournante (15) est apte à être avancée cran par cran au rythme de travail de l'outil de mise en forme multiple (1), le premier cran (16.1) représentant, par rapport à un panier de table tournante, la station de réception des articles (2), le deuxième cran (16.2), une station d'usinage pour les articles (2), le troisième cran (16.3), une station de transfert ver l'un des deux paniers d'empilage (5, 9) de la station d'empilage et le quatrième cran (16.4), une station vide et qu'une unité de passage (18) destinée à faire passer les articles du panier (15.3) du tourniquet dans un panier d'empilage (5, 9) de la station d'empilage (6) est prévue.

9. Dispositif selon la revendication 8, ***caractérisé en ce qu'***au troisième cran (16.3) est prévue une unité de passage (18) pour transférer les articles (2) du panier (15) du tourniquet dans le panier d'empilage (5, 9).

10. Dispositif selon l'une quelconque des revendications 5 à 9, ***caractérisé en ce que*** les paniers d'empilage (5, 9) sont disposés amovibles sur les bras (7, 8) de la station d'empilage (6).

11. Dispositif selon l'une quelconque des revendications 5 à 10, ***caractérisé en ce qu'***un système de contrôle du vidage du panier du tourniquet est disposé en amont de la station de réception (16.1).
